# EUROPEAN PATENT SPECIFICATION

(11) **EP 3 457 044 B1**
(45) Date of publication and mention of the grant of the patent: **02.10.2024**
(21) Application number: 16901715.9
(22) Date of filing: 13.05.2016
(51) Int. Cl.: F24F 1/0003, F24F 11/89, F24F 11/38, F24F 11/36, F24F 11/77, F24F 11/74

(54) **AIR CONDITIONER**
KLIMAANLAGE
CLIMATISEUR

(43) Date of publication of application: 20.03.2019
(73) Proprietor: Mitsubishi Electric Corporation, Chiyoda-ku Tokyo 100-8310 (JP)
(72) Inventor: SUZUKI, Yohei, 7-3, Marunouchi 2-chome, Chiyoda-ku Tokyo 1008310 (JP)
(74) Representative: Pfenning, Meinig & Partner mbB
(86) International application number: PCT/JP2016/064374
(87) International publication number: WO 2017/195367

(56) References cited:
- WO-A1-2015/068638
- JP-A- 2000 249 434
- JP-A- 2000 356 387
- JP-A- 2015 094 526
- JP-A- 2016 029 322
- JP-A- H06 180 166
- JP-A- H08 189 476
- JP-A- H10 307 050
- JP-B2- 3 291 407
- KR-A- 20150 012 947

## Description

### Field

The present invention relates to an air conditioner configured to detect anomalies occurring in the air conditioner,

### Background

To address environmental issues causing ozone depletion, refrigerant used in air conditioners has been changed from conventional fluorocarbons to R32 or the like. Unlike fluorocarbons, R32 is a flammable refrigerant. Leakage of R32 from an air conditioner may cause different problems from the problems that occur when a fluorocarbon leaks. Patent Literature 1 discloses a technology in which an air conditioner includes a refrigerant leakage detection device to warn the user if refrigerant leakage is detected. WO 2015/068638 A1 describes a heat source unit for a refrigeration device, wherein in an outdoor unit, when the detection value of a first temperature sensor is smaller than a threshold and this is still the case after a predetermined time has elapsed, it is determined that the refrigerant has pooled below a machine chamber. It is thereby determined whether refrigerant leakage is present on the basis of the detection value of the first temperature sensor without using a gas detection sensor.

### Citation List

### Patent Literature

Patent Literature 1: Japanese Patent Application Laid-open No. H7-159010

### Summary

### Technical Problem

The air conditioner described in Patent Literature 1 can detect refrigerant leakage by operating the refrigerant leakage detection device with a storage battery even during transportation and during a non-operation period in which no air conditioning control is performed. However, depletion of the storage battery requires replacement of the storage battery, or otherwise even the normal air conditioning control operation cannot be performed. Thus, depletion of the storage battery causing the air conditioning control operation to not function may misguide the user to incorrectly think that the air conditioner has failed. This presents a problem of inconvenience to the user.

The present invention has been made in view of the foregoing, and it is an object of the present invention to provide an air conditioner capable of detecting refrigerant leakage anomalies occurring in the air conditioner during a non-operation period of air conditioning control without compromising user convenience. Solution to Problem

To solve the problem and achieve the object described above, an air conditioner according to claim 1 and to claim 5 of the present invention includes an indoor unit, an outdoor unit, and a remote controller that instructs the indoor unit to control air conditioning. The air conditioner includes a first sensor to detect a first anomaly in the indoor unit.

Moreover, the air conditioner includes a second sensor to detect a second anomaly, the second anomaly being an anomaly other than the first anomaly. Moreover, the air conditioner includes a control unit to activate the first sensor and the second sensor during an operation period in which the air conditioner provides air conditioning control and to activate the first sensor during a non-operation period in which the air conditioner does not provide air conditioning control.

### Advantageous Effects of Invention

The air conditioner according to the present invention provides an advantage in that it is possible to detect an anomaly as a refrigerant leakage during a non-operation period of air conditioning control without compromising user convenience.

### Brief Description of Drawings

FIG. 1 is a diagram illustrating an example configuration of an air conditioner according the invention.
FIG. 2 is a block diagram illustrating an example configuration of an indoor unit, an outdoor unit, and a remote controller constituting the air conditioner according to the invention.
FIG. 3 is a flowchart illustrating a process of detecting an anomaly that occurs in the air conditioner said process being not included in the scope of the protection of the claims.
FIG. 4 is a diagram illustrating an example in which a processing circuit of the indoor unit according to the first embodiment is configured from a central processing unit (CPU) and a memory.
FIG. 5 is a diagram illustrating an example in which a processing circuit of the indoor unit according to the first embodiment is configured from a dedicated hardware element.
FIG. 6 is a diagram illustrating transition of the failure rate of a typical electrical appliance or the like.
FIG. 7 is a diagram illustrating a conceptual outline of the amount of power supplied to a leak sensor from a control unit in a second embodiment.
FIG. 8 is a flowchart illustrating a process of detecting an anomaly that occurs in the air conditioner, in the air conditioner according to the second embodiment not included in the scope of the protection of the claims.
FIG. 9 is a diagram illustrating a conceptual outline of transition of the result of measurement of a refrigerant leakage amount, obtained by the leak sensor of the indoor unit in a third embodiment of the invention.
FIG. 10 is a flowchart illustrating a process of detecting an anomaly that occurs in the air conditioner, in the air conditioner according to the third embodiment of the invention.

### Description of Embodiments of the Invention

The air conditioner according to embodiments of the present invention will be described in detail below with reference to the drawings. These embodiments are not intended to limit the scope of this invention.

### First Embodiment.

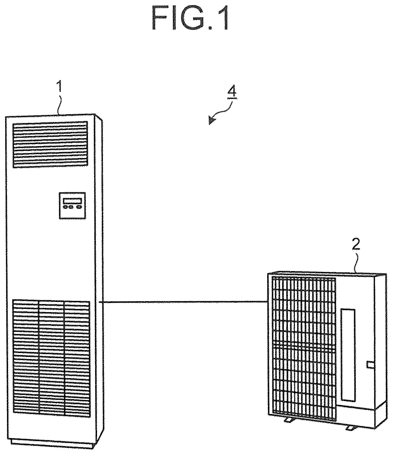

FIG. 1 is a diagram illustrating an example configuration of an air conditioner 4 according to a first embodiment of the present invention. The air conditioner 4 includes an indoor unit 1 and an outdoor unit 2 illustrated in FIG. 1, and a remote controller (not illustrated in FIG. 1) that instructs the indoor unit 1 to control air conditioning. The indoor unit 1 is, for example, a tall, floor-mounted indoor unit. Although it is assumed herein that the outdoor unit 2 is connected to a single indoor unit 1, the air conditioner 4 may be configured such that the outdoor unit 2 is connected to a plurality of indoor units 1. It is also assumed herein that the air conditioner 4 uses a flammable refrigerant (e.g., R32).

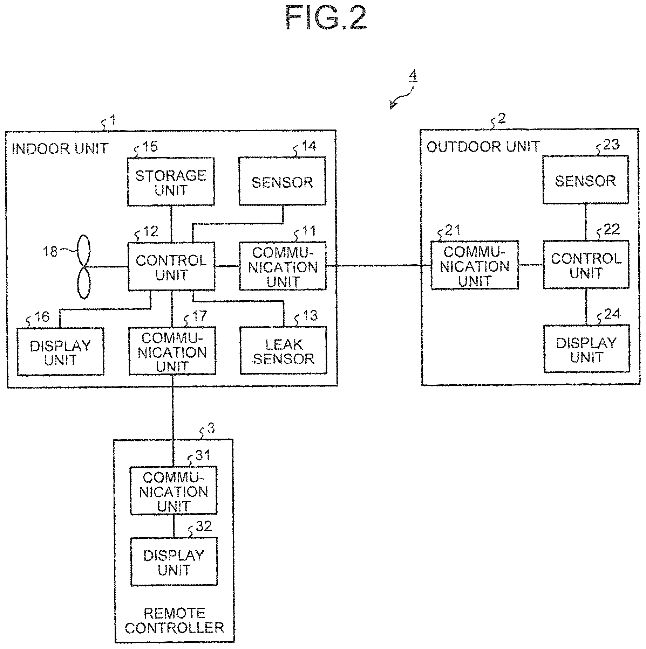

FIG. 2 is a block diagram illustrating an example configuration of the indoor unit 1, the outdoor unit 2, and a remote controller 3 constituting the air conditioner 4 according to the first embodiment.

The indoor unit 1 includes a communication unit 11 that communicates with the outdoor unit 2; a control unit 12 that controls the operation of the indoor unit 1; a leak sensor 13 that detects an anomaly relating to leakage of a refrigerant in the indoor unit 1; and a sensor 14 that detects an anomaly other than refrigerant leakage (e.g., an anomaly of the temperature in the indoor unit 1) in the indoor unit 1. The leak sensor 13 is, for example, a gas sensor. Alternatively, the leak sensor 13 is, for example, a thermistor disposed, in the indoor unit 1, in a pipe through which the refrigerant flows to detect refrigerant leakage by a change in the temperature of the pipe. The leak sensor 13 is a first sensor, and the sensor 14 is a second sensor. In addition, a refrigerant leakage anomaly is a first anomaly, and an anomaly that is not a refrigerant leakage anomaly, i.e., an anomaly other than the first anomaly, is a second anomaly.

The indoor unit 1 further includes a storage unit 15 that stores control information required, for example, for the control unit 12 to provide air conditioning control; a display unit 16 that displays an anomaly and/or the like detected by the leak sensor 13, the sensor 14, or the like; a communication unit 17 that communicates with the remote controller 3; and a fan 18 that circulates air inside the indoor unit 1.

The indoor unit 1 may include a plurality of sensors 14 that each detect a different anomaly. The indoor unit 1 may be configured not to include the display unit 16. Note that FIG. 2 only illustrates the components required for an operation of the first embodiment, and omits components that perform a general operation as an indoor unit component.

The outdoor unit 2 includes a communication unit 21 that communicates with the indoor unit 1; a control unit 22 that controls the operation of the outdoor unit 2; a sensor 23 that detects an anomaly other than refrigerant leakage (e.g., an anomaly of the temperature in the outdoor unit 2) in the outdoor unit 2; and a display unit 24 that displays an anomaly and/or the like detected by the sensor 23. The sensor 23 is a second sensor.

The outdoor unit 2 may include a plurality of sensors 23 that each detect a different anomaly. The outdoor unit 2 may be configured not to include the display unit 24. Note that FIG. 2 only illustrates the components required for an operation of the first embodiment, and omits components that perform a general operation as an outdoor unit component.

The remote controller 3 includes a communication unit 31 that communicates with the indoor unit 1; and a display unit 32 that displays an anomaly and/or the like detected in the indoor unit 1 or in the outdoor unit 2.

Note that FIG. 2 only illustrates the components required for an operation of the first embodiment, and omits components that perform a general operation as a remote controller component.

The indoor unit 1 and the remote controller 3 may be configured to be connected to each other by wire or not to be connected to each other by wire. In a case in which the indoor unit 1 and the remote controller 3 are connected to each other by wire, the communication unit 17 of the indoor unit 1 and the communication unit 31 of the remote controller 3 communicate with each other by wired communication. Otherwise, in a case in which the indoor unit 1 and the remote controller 3 are not connected to each other by wire, the communication unit 17 of the indoor unit 1 and the communication unit 31 of the remote controller 3 communicate with each other by wireless communication.

The indoor unit 1 and the outdoor unit 2 are connected to each other by wire. The control unit 12 of the indoor unit 1 exchanges control information and other information with the control unit 22 of the outdoor unit 2 via the communication unit 11 and the communication unit 21 of the outdoor unit 2. The control unit 22 of the outdoor unit 2 sends information about an anomaly detected by the sensor 23 to the control unit 12 of the indoor unit 1 via the communication unit 21 and the communication unit 11 of the indoor unit 1. The control unit 12 of the indoor unit 1 receives information about an anomaly detected by the sensor 23 of the outdoor unit 2 from the control unit 22 of the outdoor unit 2 via the communication unit 11 and the communication unit 21 of the outdoor unit 2. The leak sensor 13, the sensor 14, and the sensor 23 each detect a different anomaly.

In the first embodiment, the control unit 12 of the indoor unit 1 activates all the sensors of the air conditioner 4, i.e., the leak sensor 13 and the sensor 14 of the indoor unit 1 and the sensor 23 of the outdoor unit 2, on the basis of the operational state of the air conditioner 4 during an operation period in which the air conditioner 4 provides air conditioning control. Since the control unit 12 is controlling the operation of the indoor unit 1, the control unit 12 can recognize the operational state of the air conditioner 4.

Meanwhile, during a non-operation period in which the air conditioner 4 does not provide air conditioning control, i.e., when the air conditioner 4 is in a non-operational state, the control unit 12 activates the leak sensor 13 of the indoor unit 1, but does not activate the sensor 14 of the indoor unit 1 and the sensor 23 of the outdoor unit 2. In view of an effect on the user in a case of flammable refrigerant leakage, the control unit 12 activates the leak sensor 13 even when the air conditioner 4 is not in operation to enable refrigerant leakage to be detected. The control unit 12 supplies the power that is supplied to the control unit 12 to the leak sensor 13 also during a non-operation period. This operation enables, in the air conditioner 4, electrical power to be supplied to the leak sensor 13 to cause the leak sensor 13 to operate and to enable refrigerant leakage to be detected even during a non-operation period in which no air conditioning control is performed as long as electrical power is supplied to the indoor unit 1.

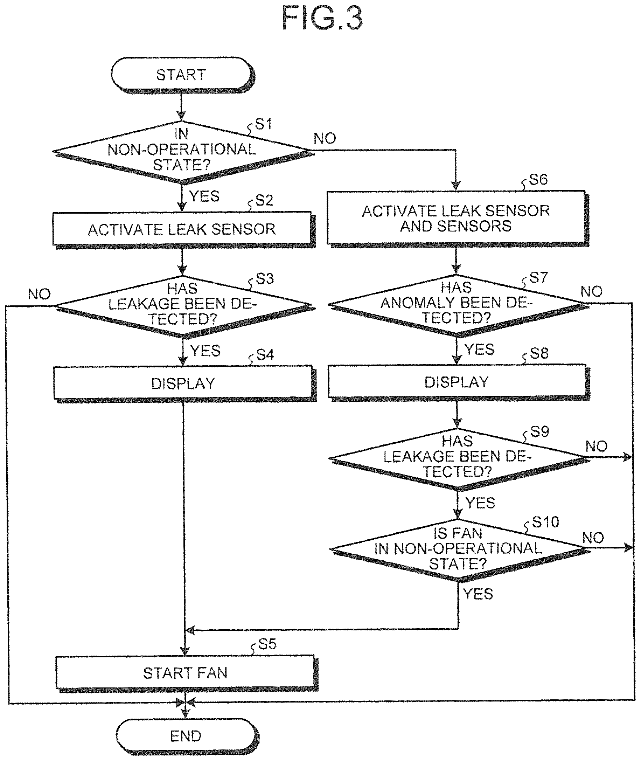

FIG. 3 is a not claimed flowchart illustrating a process of detecting an anomaly that can occurr in the air conditioner 4.

First, the control unit 12 of the indoor unit 1 checks whether the air conditioner 4 is not providing air conditioning control, i.e., the air conditioner 4 is in a non-operational state (step S1). If the air conditioner 4 is in a non-operational state (step S1: Yes), the control unit 12 activates the leak sensor 13 (step S2). The control unit 12 checks whether refrigerant leakage has been detected by the leak sensor 13 (step S3). If refrigerant leakage has been detected by the leak sensor 13 (step S3: Yes), the control unit 12 provides control to display information informing that refrigerant leakage has been detected, in any or all of the display unit 16 of the indoor unit 1, the display unit 24 of the outdoor unit 2, and the display unit 32 of the remote controller 3 (step S4). To prevent accumulation of the refrigerant leaked in the indoor unit 1, the control unit 12 provides control to rotate (i.e., start) the fan 18 of the indoor unit 1 (step S5) and then terminates the process.

Returning to step S3, if there is no refrigerant leakage detected by the leak sensor 13 (step S3: No), the control unit 12 terminates the process.

Returning to step S1, if the air conditioner 4 is providing air conditioning control (step S1: No), the control unit 12 activates the leak sensor 13, the sensor 14, and the sensor 23 (step S6). The control unit 12 checks whether an anomaly has been detected by the leak sensor 13, the sensor 14, or the sensor 23 (step S7). If an anomaly has been detected by the leak sensor 13, the sensor 14, or the sensor 23 (step S7: Yes), the control unit 12 provides control to display details of the anomaly based on the sensor that has detected the anomaly, in any or all of the display unit 16 of the indoor unit 1, the display unit 24 of the outdoor unit 2, and the display unit 32 of the remote controller 3 (step S8). If the anomaly detected is refrigerant leakage detected by the leak sensor 13 (step S9: Yes) and the fan 18 of the indoor unit 1 is not in operation (step S10: Yes), then to prevent accumulation of the refrigerant leaked in the indoor unit 1, the control unit 12 provides control to rotate (i.e., start) the fan 18 of the indoor unit 1 (step S5) and then terminates the process.

If there is no anomaly detected by the leak sensor 13, the sensor 14, or the sensor 23 (step S7: No), the control unit 12 terminates the process. Alternatively, if the anomaly detected is not refrigerant leakage detected by the leak sensor 13 (step S9: No), the control unit 12 terminates the process. Still alternatively, if the fan 18 of the indoor unit 1 is in operation (step S10: No), the control unit 12 terminates the process.

The control unit 12 constantly or periodically repeats the process of detecting an anomaly that may occur in the air conditioner 4 as illustrated in FIG. 3.

Note that if the fan 18 is in operation, the refrigerant leaked in the indoor unit 1 will not accumulate in the indoor unit 1 even if the refrigerant leaks in the indoor unit 1. Accordingly, if the fan 18 of the indoor unit 1 is in operation, the control unit 12 of the indoor unit 1 may stop supplying electrical power to the leak sensor 13 to inactivate the leak sensor 13.

The hardware configuration of the indoor unit 1 will next be described. In the indoor unit 1, the communication unit 11 and the communication unit 17 are implemented in an interface circuit capable of sending and receiving communication data. The leak sensor 13 and the sensor 14 are each implemented by a measurement device. The storage unit 15 is implemented by a memory. The display unit 16 is implemented by a light emitting diode (LED), a monitor, or the like. The fan 18 is implemented by a rotational fan unit and a drive unit such as a motor. The control unit 12 is implemented in a processing circuit. That is, the indoor unit 1 includes a processing circuit for activating the leak sensor 13, the sensor 14, and the sensor 23 depending on the operational state of the air conditioner 4. The processing circuit may be a combination of a central processing unit (CPU) that executes a program stored in a memory and the memory or may be a dedicated hardware element.

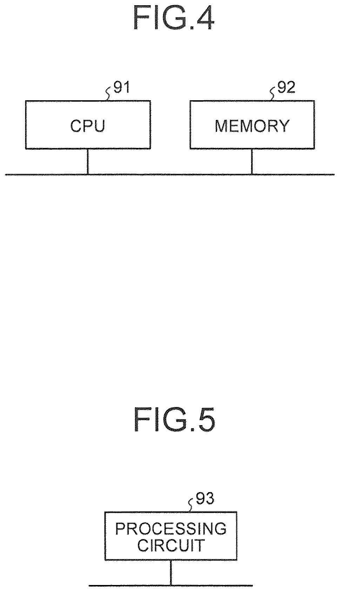

FIG. 4 is a diagram illustrating an example in which the processing circuit of the indoor unit 1 according to the first embodiment is configured from a CPU 91 and a memory 92. In a case in which the processing circuit is configured from the CPU 91 and the memory 92, each function of the control unit 12 is implemented in software, firmware, or a combination of software and firmware. The software or firmware is described as a program or programs, and is stored in the memory 92. In the processing circuit, the CPU 91 reads and executes a program or programs stored in the memory 92 to provide the functions of the control unit 12. That is, the indoor unit 1 includes the memory 92 for storing the program(s) that, upon execution by the processing circuit, cause(s) the control unit 12 to perform steps of activating the leak sensor 13, the sensor 14, and the sensor 23 depending on the operational state of the air conditioner 4. These programs may be described as causing the computer to execute the procedure and method performed by the indoor unit 1. The CPU 91 may also be a processing device, a computing unit, a microprocessor, a microcomputer, a processor, a digital signal processor (DSP), or the like. Examples of the memory 92 include non-volatile or volatile semiconductor memories such as a random access memory (RAM), a read-only memory (ROM), a flash memory, an erasable programmable ROM (EPROM), and an electrically erasable programmable ROM (EEPROM); a magnetic disk, a flexible disk, an optical disk, a compact disc, a MiniDisc, and a digital versatile disc (DVD). The memory 92 may be the same memory as the memory for implementing the storage unit 15.

FIG. 5 is a diagram illustrating an example in which the processing circuit of the indoor unit 1 according to the first embodiment is configured from a dedicated hardware element. In a case in which the processing circuit is a dedicated hardware element, a processing circuit 93 illustrated in FIG. 5 is, for example, a single circuit, a set of multiple circuits, a programmed processor, a parallel programmed processor, an application specific integrated circuit (ASIC), a field programmable gate array (FPGA), or a combination thereof. The functions of the control unit 12 may be implemented in the processing circuit 93 on a per-function basis or may be implemented collectively in the processing circuit 93.

The functions of the control unit 12 may be implemented partially in a dedicated hardware element, and partially in software or firmware. In this manner, the processing circuit can provide the functions described above in dedicated hardware, software, firmware, or a combination thereof.

As described above, according to the present embodiment, the control unit 12 of the indoor unit 1 does not activate the sensors 14 and 23, but supplies electrical power to the leak sensor 13 for activation, during a non-operation period in which the air conditioner 4 does not provide air conditioning control. This operation enables the air conditioner 4 to detect refrigerant leakage even during a non-operation period. In addition, the control unit 12 supplies electrical power to the leak sensor 13 to activate the leak sensor 13 without using a storage battery during a non-operation period of the air conditioner 4, thereby enabling leakage detection to be performed without imposing a burden on the user and thus enabling user convenience to be improved. As long as the indoor unit 1 is plugged into a receptacle in a usual house, the air conditioner 4 can detect refrigerant leakage during a non-operation period of the air conditioner 4. The control unit 12 also provides control not to activate the sensors 14 and 23, other than the leak sensor 13, during a non-operation period of the air conditioner 4. This operation enables the air conditioner 4 to reduce power consumption during a non-operation period as compared to when all the sensors are activated.

Although the air conditioner 4 is herein described as detecting continuously only refrigerant leakage during a non-operation period, the configuration is not limited thereto. In general, the air conditioner 4 checks the connection status between the indoor unit 1 and the outdoor unit 2 by periodic communication therebetween. Thus, the air conditioner 4 may also detect a communication anomaly between the indoor unit 1 and the outdoor unit 2 during a non-operation period.

Moreover, anomalies that it is anticipated will occur in the air conditioner 4, i.e., anomalies that will be detected by the leak sensor 13 and the sensor 14 of the indoor unit 1 and the sensor 23 of the outdoor unit 2, may each be assigned a severity, and the severity of each of the anomalies may previously be stored in the air conditioner 4. The severity information may previously be set and stored in the storage unit 15 by the manufacturer of the air conditioner 4 during the initial configuration stage, and the setting or the initial configuration may be configurable by the user of the air conditioner 4. The air conditioner 4 may be configured to activate the first sensor for detecting the first anomaly, which is a high severity anomaly having a severity higher than a predetermined severity, both during an operation period and during a non-operation period, and to activate the second sensor for detecting the second anomaly having a severity lower than the predetermined severity and lower than the severity of the first anomaly only during an operation period. For example, in the air conditioner 4, the sensor 13 is the first sensor and the sensors 14 and 23 are each the second sensor. The air conditioner 4 can promptly detect an anomaly having a large effect on the user by activation of the sensor capable of detecting a high severity anomaly also during a non-operation period to detect a high severity anomaly having a large effect on the user upon occurrence regardless of whether the air conditioning control is being performed or not.

### Second Embodiment.

In a second embodiment, the control unit 12 activates the leak sensor 13 continuously or intermittently during a non-operation period in which the air conditioner 4 does not provide air conditioning control, i.e., when the air conditioner 4 is in a non-operational state. Differences from the first embodiment will be described below.

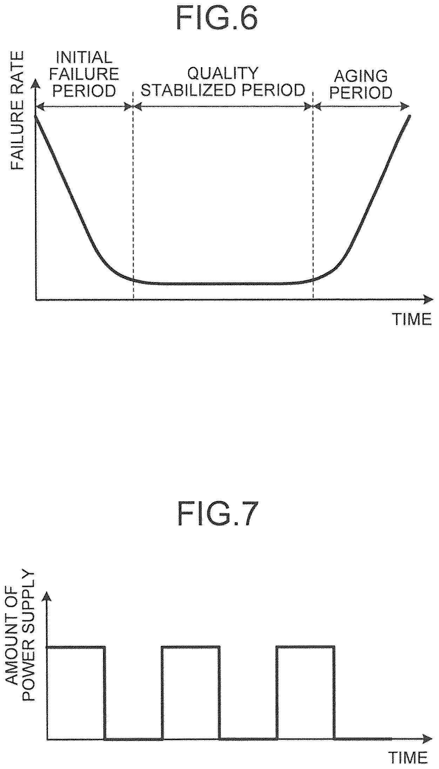

The configurations of the indoor unit 1, the outdoor unit 2, and the remote controller 3 are similar to those of the first embodiment. FIG. 6 is a diagram illustrating transition of the failure rate of a typical electrical appliance or the like. An electrical appliance or the like generally exhibits a tendency to have a higher failure rate during an initial failure period due to reasons such as a manufacturing problem attributable to assemble work, a component problem attributable to a part being used, or an installation problem attributable to installation work in the case of equipment installed in a building such as the air conditioner 4. Moreover, an electrical appliance or the like degrades through continued use, and therefore exhibits a tendency to have a higher failure rate due to the life of the product itself during the aging period. In contrast, between the initial failure period and the aging period, there is a quality stabilized period in which the failure rate is low and the product quality is stable if an occurrence of an unexpected problem is not taken into consideration.

In the initial failure period after installation (i.e., start of an operation) of the air conditioner 4, taking into consideration a characteristic of the failure rate of a typical electrical appliance illustrated in FIG. 6, the control unit 12 of the indoor unit 1 activates the leak sensor 13 continuously even when the air conditioner 4 is not in operation.

In the quality stabilized period after the initial failure period has elapsed from the start of an operation of the air conditioner 4 and before the aging period, the control unit 12 of the indoor unit 1 activates the leak sensor 13 intermittently when the air conditioner 4 is not in operation. The control unit 12 activates the leak sensor 13 with a certain period, for example, at predetermined time intervals. The control unit 12 stops supplying electrical power to the leak sensor 13 during a time period in which the leak sensor 13 is not activated. FIG. 7 is a diagram illustrating a conceptual outline of the amount of power supplied to the leak sensor 13 from the control unit 12 in the second embodiment. The control unit 12 supplies electrical power to the leak sensor 13 with a predetermined period, i.e., at predetermined time intervals, to activate the leak sensor 13, and supplies no electrical power to the leak sensor 13 in the other periods not to activate the leak sensor 13. This operation enables the air conditioner 4 to reduce the power usage during a non-operation period of the air conditioner 4 as compared to the first embodiment.

Then, when the time period after the start of an operation of the air conditioner 4 enters the aging period, the control unit 12 of the indoor unit 1 activates the leak sensor 13 continuously when the air conditioner 4 is not in operation.

Information about the initial failure period, the quality stabilized period, and the aging period illustrated in FIG. 6 and about the cyclic period of electrical power supplied to the leak sensor 13 illustrated in FIG. 7, i.e., information about the time periods in which the air conditioner 4 activates the leak sensor 13 during a non-operation period, is stored in the storage unit 15 of the indoor unit 1 as control information. The control unit 12 provides control to activate the leak sensor 13 continuously or intermittently as described above on the basis of the control information stored in the storage unit 15.

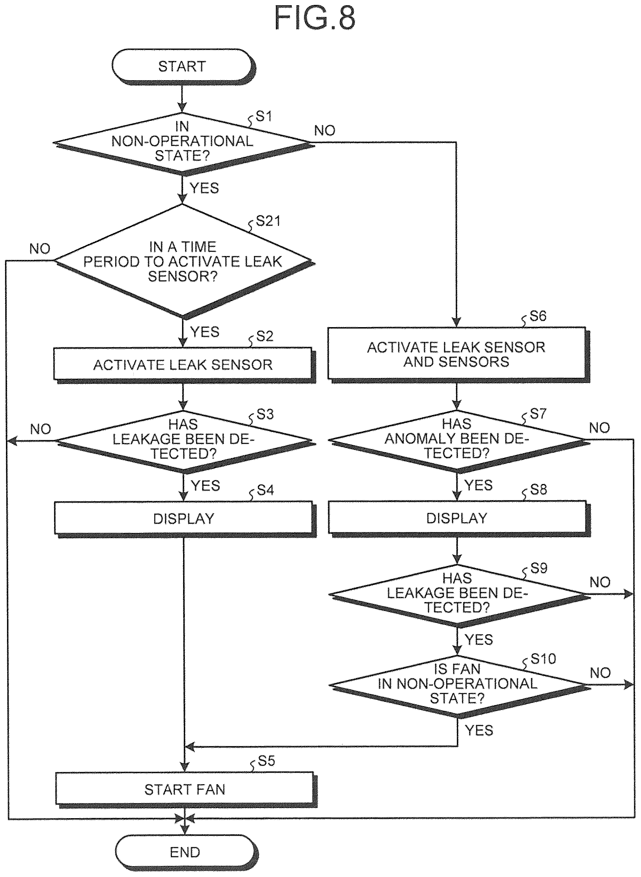

FIG. 8 is a not claimed flowchart illustrating a process of detecting an anomaly that occurs in the air conditioner Z 4. If the air conditioner 4 is in a non-operational state (step S1: Yes), the control unit 12 of the indoor unit 1 checks whether the air conditioner 4 is in a time period to activate the leak sensor 13 (step S21).

The control unit 12 refers to the control information stored in the storage unit 15, more specifically, information about the initial failure period, the quality stabilized period, and the aging period illustrated in FIG. 6, and information about the cyclic period of electrical power supplied to the leak sensor 13 illustrated in FIG. 7. In the initial failure period, in the aging period, and in a time period in which electrical power is supplied to the leak sensor 13 as illustrated in FIG. 7 in the quality stabilized period, the control unit 12 determines that the air conditioner 4 is in a time period to activate the leak sensor 13; and in a time period in which no electrical power is supplied to the leak sensor 13 as illustrated in FIG. 7 in the quality stabilized period, the control unit 12 determines that the air conditioner 4 is in a time period not to activate the leak sensor 13. In a time period to activate the leak sensor 13 (step S21: Yes), the control unit 12 activates the leak sensor 13 (step S2). Otherwise, in a time period not to activate the leak sensor 13 (step S21: No), the control unit 12 terminates the process.

The other part of the process illustrated in FIG. 8 is similar to the process of the flowchart of FIG. 3 illustrated in relation to the first embodiment.

As described above, according to the present embodiment, the control unit 12 of the indoor unit 1 activates the leak sensor 13 continuously or intermittently depending on the elapsed time from the start of an operation of the air conditioner 4 on the basis of the control information during a non-operation period in which the air conditioner 4 does not provide air conditioning control. This operation enables the control unit 12 to activate the leak sensor 13 intermittently during a time period in which refrigerant leakage is less likely to be detected and to activate the leak sensor 13 continuously during a time period in which refrigerant leakage is more likely to be detected, thereby enabling power usage to be reduced during a non-operation period of the air conditioner 4 as compared to the first embodiment.

### Third Embodiment.

In a third embodiment, the control unit 12 activates the leak sensor 13 continuously or intermittently using a different control operation from that of the second embodiment during a non-operation period in which the air conditioner 4 does not provide air conditioning control, i.e., when the air conditioner 4 is in a non-operational state. Differences from the first and second embodiments will be described below.

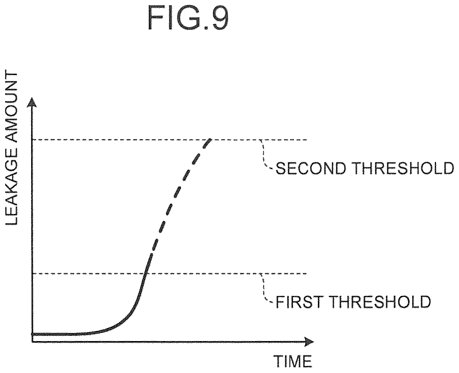

The configurations of the indoor unit 1, the outdoor unit 2, and the remote controller 3 are similar to those of the first embodiment. FIG. 9 is a diagram illustrating a conceptual outline of transition of the result of measurement of a refrigerant leakage amount, obtained by the leak sensor 13 of the indoor unit 1 in the third embodiment. The leak sensor 13 measures the refrigerant leakage amount upon detection of the refrigerant leakage.

FIG. 9 illustrates a second threshold. The second threshold is used such that the control unit 12 determines that refrigerant leaks when the refrigerant leakage amount measured by the leak sensor 13 exceeds the second threshold.

FIG. 9 also illustrates a first threshold. The first threshold is lower than the second threshold and is used in control such that the control unit 12 switches the operational method of the leak sensor 13 when the refrigerant leakage amount measured by the leak sensor 13 exceeds the first threshold.

If the refrigerant leakage amount measured by the leak sensor 13 is at or below the first threshold, it is unlikely that the refrigerant leakage amount will exceed the second threshold within a short time period. Thus, the control unit 12 makes the next measurement of the refrigerant leakage amount after a certain interval, i.e., intermittently. The time interval for intermittent operation may be the same as the time interval of the second embodiment.

In contrast, if the refrigerant leakage amount detected by the leak sensor 13 exceeds the first threshold, the refrigerant leakage amount may thereafter exceed the second threshold. Thus, the control unit 12 makes the next measurement of the refrigerant leakage amount without any interval, i.e., continuously.

Even after the refrigerant leakage amount has exceeded the first threshold and the control unit 12 has continuously measured the refrigerant leakage amount, if the refrigerant leakage amount falls below the first threshold, then the control unit 12 may thereafter make the next measurement of the refrigerant leakage amount again after a certain interval, i.e., intermittently.

Information about the first threshold and the second threshold illustrated in FIG. 9, i.e., information about the time periods in which the air conditioner 4 activates the leak sensor 13 during a non-operation period, is stored in the storage unit 15 of the indoor unit 1 as control information. The control unit 12 provides control to activate the leak sensor 13 continuously or intermittently as described above on the basis of the control information stored in the storage unit 15.

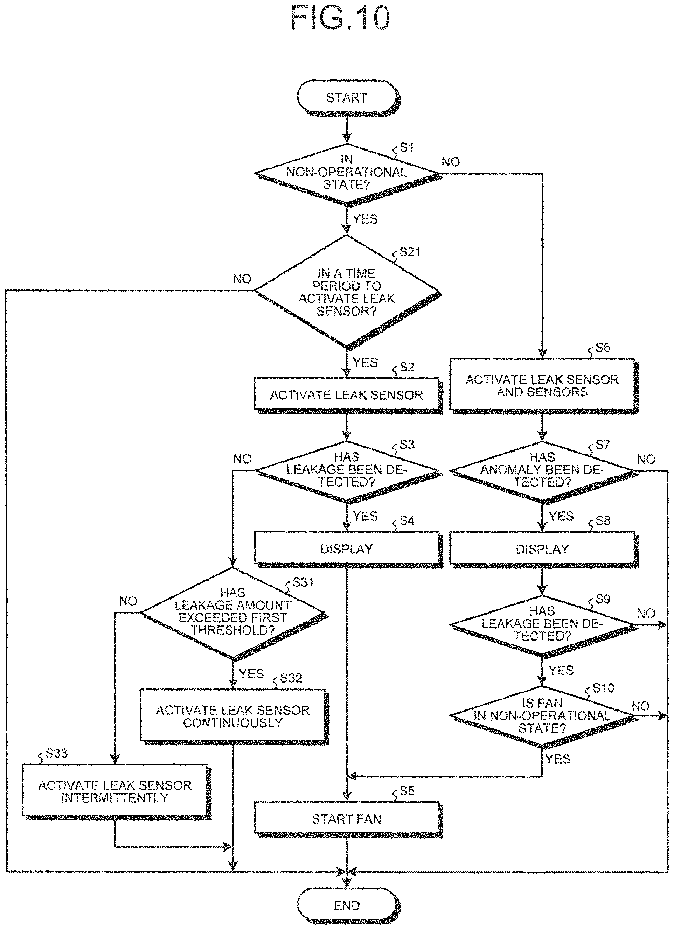

FIG. 10 is a flowchart illustrating a process of detecting an anomaly that occurs in the air conditioner 4, in the air conditioner 4 according to the third embodiment. If there is no refrigerant leakage detected by the leak sensor 13 (step S3: No), the control unit 12 checks whether the refrigerant leakage amount measured by the leak sensor 13 has exceeded the first threshold (step S31).

If the refrigerant leakage amount measured by the leak sensor 13 has exceeded the first threshold (step S31: Yes), the control unit 12 activates the leak sensor 13 continuously (step S32). That is, the control unit 12 makes the next measurement of the refrigerant leakage amount without any interval, i.e., continuously.

If the refrigerant leakage amount measured by the leak sensor 13 is at or below the first threshold (step S31: No), the control unit 12 activates the leak sensor 13 intermittently (step S33). That is, the control unit 12 makes the next measurement of the refrigerant leakage amount after a certain interval, i.e., intermittently.

The other part of the process illustrated in FIG. 10 is similar to the process of the flowchart of FIG. 8 illustrated in relation to the second embodiment.

As described above, according to the present embodiment, the control unit 12 of the indoor unit 1 activates the leak sensor 13 continuously or intermittently depending on the refrigerant leakage amount of the previous measurement by the leak sensor 13 on the basis of the control information during a non-operation period in which the air conditioner 4 does not provide air conditioning control. This operation enables the control unit 12 to activate the leak sensor 13 intermittently during a time period in which refrigerant leakage is less likely to be detected and to activate the leak sensor 13 continuously during a time period in which refrigerant leakage is more likely to be detected, thereby enabling power usage to be reduced during a non-operation period of the air conditioner 4 similarly to the second embodiment.

The configurations described in the foregoing embodiments are merely examples of various aspects of the present invention. These configurations may be combined with a known other technology, and moreover, a part of such configurations may be omitted and/or modified without departing from the scope of the present invention which is solely defined by the appended claims.

### Reference Signs List

1 indoor unit; 2 outdoor unit; 3 remote controller; 4 air conditioner; 11, 17, 21, 31 communication unit; 12, 22 control unit; 13 leak sensor; 14, 23 sensor; 15 storage unit; 16, 24, 32 display unit; 18 fan.

## Claims

1. An air conditioner (4) including an indoor unit (1), an outdoor unit (2), and a remote controller (3) configured to instruct the indoor unit (1) to control air conditioning, the air conditioner (4) comprising:
a first sensor (13) configured to detect a first anomaly in the indoor unit (1), the first anomaly being an anomaly relating to leakage of a refrigerant;
a second sensor (14, 23) configured to detect a second anomaly, the second anomaly being an anomaly other than the first anomaly;
a control unit (12) configured to activate the first sensor (13) and the second sensor (14, 23) during an operation period in which the air conditioner (4) provides air conditioning control and to activate the first sensor (13) during a non-operation period in which the air conditioner (4) does not provide air conditioning control; and
a storage unit (15) configured to store control information including information for a time period in which the air conditioner (4) activates the first sensor (13) during a non-operation period, wherein,
if the air conditioner (4) is not in operation, the control unit (12) refers to the control information, and activates the first sensor (13) continuously when a refrigerant leakage amount of a previous measurement by the first sensor (13) does not exceed a second threshold, which is a threshold for determining that the refrigerant leaks, but exceeds a first threshold, which is lower than the second threshold, and activates the first sensor (13) intermittently when the refrigerant leakage amount of the previous measurement by the first sensor (13) does not exceed the first threshold.

2. The air conditioner (4) according to claim 1, wherein the control unit (12) is configured to cause the first anomaly or the second anomaly to be displayed on a display unit (16, 24, 32) included in the indoor unit (1), in the outdoor unit (2), or in the remote controller (3).

3. The air conditioner (4) according to claim 1 or 2, wherein if the first anomaly is detected, the control unit (12) is configured to activate a fan (18) included in the indoor unit (1) if the fan (18) is not in operation.

4. The air conditioner (4) according to any one of claims 1 to 3, wherein the first sensor (13) is a gas sensor or a thermistor disposed in a pipe through which the refrigerant flows to detect leakage of the refrigerant on a basis of a change in temperature of the pipe.

5. An air conditioner (4) including an indoor unit (1), an outdoor unit (2), and a remote controller (3) configured to instruct the indoor unit (1) to control air conditioning, the air conditioner (4) comprising a storage unit (15) in which severity information are stored, the severity information comprising a severity assigned to each of a first and a second anomaly occurring in the air conditioner (4), and the air conditioner (4) comprising:
a first sensor (13) configured to detect the first anomaly in the indoor unit (1), the first anomaly being a high severity anomaly having a stored severity higher than a predetermined severity;
a second sensor (14, 23) configured to detect the second anomaly having a stored severity lower than the predetermined severity and lower than the stored severity of the first anomaly;
a control unit (12) configured to activate the first sensor (13) and the second sensor (14, 23) during an operation period in which the air conditioner (4) provides air conditioning control and to activate the first sensor (13) during a non-operation period in which the air conditioner (4) does not provide air conditioning control; and
wherein the storage unit (15) is further configured to store control information including information for a time period in which the air conditioner (4) activates the first sensor (13) during a non-operation period, wherein,
if the air conditioner (4) is not in operation, the control unit (12) refers to the control information, and activates the first sensor (13) continuously when a measurement value of a previous measurement by the first sensor (13) does not exceed a second threshold, which is a threshold for determining that the first anomaly occurs, but exceeds a first threshold, which is lower than the second threshold, and activates the first sensor (13) intermittently when the measurement value of the previous measurement by the first sensor (13) does not exceed the first threshold.

## Patentansprüche

1. Klimaanlage (4), aufweisend eine Inneneinheit (1), eine Außeneinheit (2) und eine Fernsteuerung (3), die eingerichtet ist, die Inneneinheit (1) anzuweisen, eine Klimatisierung zu steuern, wobei die Klimaanlage (4) umfasst:
einen ersten Sensor (13), der eingerichtet ist, eine erste Anomalie in der Inneneinheit (1) zu erfassen, wobei die erste Anomalie eine Anomalie ist, die sich auf das Austreten eines Kältemittels bezieht;
einen zweiten Sensor (14, 23), der eingerichtet ist, eine zweite Anomalie zu erfassen, wobei die zweite Anomalie eine andere Anomalie als die erste Anomalie ist;
eine Steuereinheit (12), die eingerichtet ist, den ersten Sensor (13) und den zweiten Sensor (14, 23) während einer Betriebsperiode, in der die Klimaanlage (4) eine Klimatisierungssteuerung bereitstellt, zu aktivieren und den ersten Sensor (13) während einer Nichtbetriebsperiode, in der die Klimaanlage (4) keine Klimatisierungssteuerung bereitstellt, zu aktivieren; und
eine Speichereinheit (15), die eingerichtet ist, Steuerinformationen zu speichern, die Informationen für eine Zeitperiode enthalten, in der die Klimaanlage (4) den ersten Sensor (13) während einer Nichtbetriebsperiode aktiviert, wobei,
wenn die Klimaanlage (4) nicht in Betrieb ist, sich die Steuereinheit (12) auf die Steuerinformationen bezieht und den ersten Sensor (13) kontinuierlich aktiviert, wenn eine Kältemittelaustrittsmenge einer vorherigen Messung durch den ersten Sensor (13) einen zweiten Schwellenwert nicht überschreitet, der ein Schwellenwert zum Bestimmen ist, dass das Kältemittel austritt, aber einen ersten Schwellenwert überschreitet, der niedriger als der zweite Schwellenwert ist, und den ersten Sensor (13) intermittierend aktiviert, wenn die Kältemittelaustrittsmenge der vorherigen Messung durch den ersten Sensor (13) den ersten Schwellenwert nicht überschreitet.

2. Klimaanlage (4) nach Anspruch 1, wobei die Steuereinheit (12) eingerichtet ist zu veranlassen, dass die erste Anomalie oder die zweite Anomalie auf einer Anzeigeeinheit (16, 24, 32) angezeigt werden, die in der Inneneinheit (1), in der Außeneinheit (2) oder in der Fernsteuerung (3) enthalten ist.

3. Klimaanlage (4) nach Anspruch 1 oder 2, wobei die Steuereinheit (12) eingerichtet ist, wenn die erste Anomalie erfasst wird, einen in der Inneneinheit (1) enthaltenen Lüfter (18) zu aktivieren, wenn der Lüfter (18) nicht in Betrieb ist.

4. Klimaanlage (4) nach einem der Ansprüche 1 bis 3, wobei der erste Sensor (13) ein Gassensor oder ein Thermistor ist, der in einer Leitung angeordnet ist, durch die das Kältemittel strömt, um einen Austritt des Kältemittels auf der Grundlage einer Temperaturänderung der Leitung zu erfassen.

5. Klimaanlage (4), aufweisend eine Inneneinheit (1), eine Außeneinheit (2) und eine Fernsteuerung (3), die eingerichtet ist, die Inneneinheit (1) anzuweisen, eine Klimatisierung zu steuern, wobei die Klimaanlage (4) eine Speichereinheit (15) umfasst, in der Schweregradinformationen gespeichert sind, wobei die Schweregradinformationen einen Schweregrad umfassen, der jeweils einer ersten und einer zweiten in der Klimaanlage (4) auftretenden Anomalie zugeordnet ist, und die Klimaanlage (4) umfasst:
einen ersten Sensor (13), der eingerichtet ist, die erste Anomalie in der Inneneinheit (1) zu erfassen, wobei die erste Anomalie eine Anomalie mit hohem Schweregrad ist, die einen gespeicherten Schweregrad aufweist, der höher als ein vorbestimmter Schweregrad ist;
einen zweiten Sensor (14, 23), der eingerichtet ist, die zweite Anomalie zu erfassen, die einen gespeicherten Schweregrad aufweist, der niedriger ist als der vorbestimmte Schweregrad und niedriger als der gespeicherte Schweregrad der ersten Anomalie;
eine Steuereinheit (12), die eingerichtet ist, den ersten Sensor (13) und den zweiten Sensor (14, 23) während einer Betriebsperiode, in der die Klimaanlage (4) eine Klimatisierungssteuerung bereitstellt, zu aktivieren und den ersten Sensor (13) während einer Nichtbetriebsperiode, in der die Klimaanlage (4) keine Klimatisierungssteuerung bereitstellt, zu aktivieren; und
wobei die Speichereinheit (15) ferner eingerichtet ist, Steuerinformationen zu speichern, die Informationen für eine Zeitperiode enthalten, in der die Klimaanlage (4) den ersten Sensor (13) während einer Nichtbetriebsperiode aktiviert, wobei,
wenn die Klimaanlage (4) nicht in Betrieb ist, sich die Steuereinheit (12) auf die Steuerinformationen bezieht und den ersten Sensor (13) kontinuierlich aktiviert, wenn ein Messwert einer vorherigen Messung durch den ersten Sensor (13) einen zweiten Schwellenwert nicht überschreitet, der ein Schwellenwert zum Bestimmen ist, dass die erste Anomalie auftritt, aber einen ersten Schwellenwert überschreitet, der niedriger als der zweite Schwellenwert ist, und den ersten Sensor (13) intermittierend aktiviert, wenn der Messwert der vorherigen Messung durch den ersten Sensor (13) den ersten Schwellenwert nicht überschreitet.

## Revendications

1. Climatiseur (4) comprenant une unité intérieure (1), une unité extérieure (2) et une télécommande (3) configurée pour donner comme instruction à l'unité intérieure (1) de commander la climatisation, le climatiseur (4) comprenant :
un premier capteur (13) configuré pour détecter une première anomalie dans l'unité intérieure (1), la première anomalie étant une anomalie relative à une fuite d'un fluide frigorigène ;
un second capteur (14, 23) configuré pour détecter une seconde anomalie, la seconde anomalie étant une anomalie autre que la première anomalie ;
une unité de commande (12) configurée pour activer le premier capteur (13) et le second capteur (14, 23) pendant une période de fonctionnement durant laquelle le climatiseur (4) fournit une commande de climatisation et pour activer le premier capteur (13) pendant une période de non-fonctionnement durant laquelle le climatiseur (4) ne fournit pas de commande de climatisation ; et
une unité de stockage (15) configurée pour stocker des informations de commande comprenant des informations pour une période de temps durant laquelle le climatiseur (4) active le premier capteur (13) pendant une période de non-fonctionnement, dans lequel :
si le climatiseur (4) n'est pas en fonctionnement, l'unité de commande (12) se réfère aux informations de commande, et active le premier capteur (13) en continu lorsqu'une quantité de fuite de fluide frigorigène d'une mesure précédente par le premier capteur (13) ne dépasse pas un second seuil, qui est un seuil pour déterminer que le fluide frigorigène fuit, mais dépasse un premier seuil, qui est inférieur au second seuil, et active le premier capteur (13) par intermittence lorsque la quantité de fuite de fluide frigorigène de la mesure précédente par le premier capteur (13) ne dépasse pas le premier seuil.

2. Climatiseur (4) selon la revendication 1, dans lequel l'unité de commande (12) est configurée pour amener la première anomalie ou la seconde anomalie à être affichée sur une unité d'affichage (16, 24, 32) comprise dans l'unité intérieure (1), dans l'unité extérieure (2) ou dans la télécommande (3).

3. Climatiseur (4) selon la revendication 1 ou 2, dans lequel si la première anomalie est détectée, l'unité de commande (12) est configurée pour activer un ventilateur (18) compris dans l'unité intérieure (1) si le ventilateur (18) n'est pas en fonctionnement.

4. Climatiseur (4) selon l'une quelconque des revendications 1 à 3, dans lequel le premier capteur (13) est un capteur de gaz ou une thermistance disposé(e) dans un tuyau à travers lequel le fluide frigorigène s'écoule pour détecter une fuite du fluide frigorigène sur la base d'un changement de température du tuyau.

5. Climatiseur (4) comprenant une unité intérieure (1), une unité extérieure (2) et une télécommande (3) configurée pour donner comme instruction à l'unité intérieure (1) de commander la climatisation, le climatiseur (4) comprenant une unité de stockage (15) dans laquelle des informations de gravité sont stockées, les informations de gravité comprenant une gravité attribuée à chacune d'une première et d'une seconde anomalie survenant dans le climatiseur (4), et le climatiseur (4) comprenant :
un premier capteur (13) configuré pour détecter la première anomalie dans l'unité intérieure (1), la première anomalie étant une anomalie de gravité élevée présentant une gravité stockée supérieure à une gravité prédéterminée ;
un second capteur (14, 23) configuré pour détecter la seconde anomalie présentant une gravité stockée inférieure à la gravité prédéterminée et inférieure à la gravité stockée de la première anomalie ;
une unité de commande (12) configurée pour activer le premier capteur (13) et le second capteur (14, 23) pendant une période de fonctionnement durant laquelle le climatiseur (4) fournit une commande de climatisation et pour activer le premier capteur (13) pendant une période de non-fonctionnement durant laquelle le climatiseur (4) ne fournit pas de commande de climatisation ; et
dans lequel l'unité de stockage (15) est configurée en outre pour stocker des informations de commande comprenant des informations pour une période de temps durant laquelle le climatiseur (4) active le premier capteur (13) pendant une période de non-fonctionnement, dans lequel :
si le climatiseur (4) n'est pas en fonctionnement, l'unité de commande (12) se réfère aux informations de commande, et active le premier capteur (13) en continu lorsqu'une valeur de mesure d'une mesure précédente par le premier capteur (13) ne dépasse pas un second seuil, qui est un seuil pour déterminer que la première anomalie survient, mais dépasse un premier seuil, qui est inférieur au second seuil, et active le premier capteur (13) par intermittence lorsque la valeur de mesure de la mesure précédente par le premier capteur (13) ne dépasse pas le premier seuil.
